# EUROPEAN PATENT APPLICATION

(11) **EP 4 086 195 A1**
(43) Date of publication of application: **09.11.2022**
(21) Application number: 22171437.1
(22) Date of filing: 03.05.2022
(51) Int. Cl.: B65F 1/00, B65F 1/14, B30B 9/32

(54) **COMPACTING DEVICE FOR ARTICLES, PREFERABLY CONTAINERS**

(30) Priority: 04.05.2021 IT 202100011363
(71) Applicant: Daint S.r.l., 36034 Malo (Vicenza) (IT)
(72) Inventor: GUGLIELMI, Roberto, 36015 Schio (Vicenza) (IT); MASELLO, Giovanni Franco, 36030 San Vito di Leguzzano (Vicenza) (IT)
(74) Representative: Manfrin, Marta

(57) **Abstract**

Described is a compacting device (1) for compacting articles, preferably containers, comprising a compacting unit (10) in turn comprising a first operating member (20) associated with a first rotating shaft (21) and a second operating member (30) associated with a second rotating shaft (31), wherein the first operating member (20) comprises at least four protruding compaction elements (22a, 22b, 22c, 22d) arranged successively, or consecutively, along a circumferential direction of said first rotating shaft (21). Subsequent or consecutive protruding compaction elements of said at least four protruding compaction elements (22a, 22b, 22c, 22d) of said first operating member (20) are alternated in said circumferential direction of said first rotating shaft (21) by a depression or recess (23a, 23b, 23c, 23d) of said first operating member (20). The second operating member (30) comprises at least four protruding compaction elements (32a, 32b, 32c, 32d) arranged successively, or consecutively, along a circumferential direction of the second rotating shaft (31), wherein successive, or consecutive, protruding compaction elements, of said at least four protruding compaction elements (32a, 32b, 32c, 32d) of said second operating member (30) are alternated in said circumferential direction of said second rotating shaft (31) by a depression or recess (33a, 33b, 33c, 33d) of said second operating member (30). Each protruding compaction element (22a, 22b, 22c, 22d) of said at least four compaction protruding elements (22a, 22b, 22c, 22d) of said first operating member (20) extends radially from said first rotating shaft (21) so as to operate in conjunction, in use, with a depression or recess (33a, 33b, 33c, 33d) of the second operating member (30) in order to compact an article, while each protruding compaction element (32a, 32b, 32c, 32d) of said at least four protruding compaction elements (32a, 32b, 32c, 32d) of said second operating member (30) extends radially from said second rotating shaft (31) so as to operate in conjunction, in use, with a depression or recess (23a, 23b, 23c, 23d) of the first operating member (20) in order to compact an article. In at least a first operating configuration, one of the four protruding compaction elements (22a, 22b, 22c, 22d) of the first operating member (20) is received in a corresponding depression or recess of the four depressions or recesses (33a, 33b, 33c, 33d) of the second operating member (30) and in at least a second operating configuration one of the four successive, or consecutive, protruding compaction elements (32a, 32b, 32c, 32d) of the second operating member (30) is received in a corresponding depression or recess of the four depressions or recess (23a, 23b, 23c, 23d) of the first operating member (20). The invention further relates to a method for compacting an article, preferably a container.

## Description

This invention relates generally to a compacting device for articles. More specifically, the invention relates to a compacting device for compacting containers, in particular plastic containers, even more particularly PET containers, such as, for example, containers for example for drinks or foods.

Waste separation has become increasingly important in recent years in the field of waste collection. Specifically, the problem of the collection and recycling of plastic is taking on an increasingly important role.

Plastic recycling is currently carried out in two main ways. A first method provides for a chemical type of recycling. Chemical recycling involves breaking up the polymers, that is to say, the basic molecules of plastic materials, in order to obtain the starting raw materials, that is to say, the monomers, for the production of new products.

A second method provides for mechanical type of recycling. In this case, the plastic products are firstly crushed and subsequently washed and dried. Lastly, the resulting material is sent to an extruder for granulation, that is to say, the production of granules to be used for the subsequent processing.

Both methods of plastic recycling provide for an initial step of collection and separation of the products according to the type of plastic they are made of. This step constitutes one of the main problems of plastic recycling.

For this purpose, in addition to or in place of the common separate waste collection, smart skips, compactors, or "reverse vending machines" are currently available, which are used for the transfer of used household products or packaging, and consequently empty, such as plastic bottles. In addition, in order to encourage separate waste collection, many of these smart skips return to the user a sum of money proportional to the number of bottles inserted. Alternatively, tax reductions can be envisaged for the user, for example on the waste disposal tax. These smart skips are also often equipped with a recognition system of the product material inserted inside them, so as to accept only products made of a certain material.

In order to effectively and efficiently collect a large quantity of waste, smart skips must be designed to effectively store the packaging or containers that are placed in it, so that the skip does not have to be emptied too frequently.

For this purpose, the containers or packaging, once inserted into the smart skip, are first compressed or compacted in such a way that they take up less space, and then stored.

However, the configuration of current smart skips or compactors for containers is disadvantageous or not optimised.

Specifically, the known compactors represent a major drawback, firstly because they do not effectively compact the containers, especially plastic containers, specifically made of PET.

More specifically, among the materials most frequently used for the production of containers such as bottles or packaging, there are plastic materials such as PE or PET. These materials are shape memory polymers, that is to say, they are capable of returning from a temporarily deformed state to the original state.

The containers made with shape memory polymers, once compressed between the traditional compactors of a smart skip, initially tend to take the form of a film a few millimetres thick.

Subsequently, however, the shape memory of the materials with which these containers are made means that the latter tend to return, at least partially, to their original shape.

For example, a bottle made of PET, once compacted by the rollers of a compactor, still tends, even if minimally, to return to its original shape, that is, swollen.

It follows that the subsequent storage of the containers is not optimised. In fact, the containers compacted in the traditional roller compactors, due to the shape memory of the materials with which they are made, occupy a larger space than desired.

Consequently, the number of containers that can be stored in the storage region is less and the smart skip or compactor needs to be emptied more frequently.

Moreover, the known smart skips do not allow the subdivision of the articles to be compacted. In particular, the need is felt for a smart skip capable of automatically storing compacted articles, for example on the basis of their material or the articles they contained when they were in use.

The invention aims to provide a compactor for articles, preferably containers, which overcomes the drawbacks mentioned above with reference to the known art and/or to achieve further advantages.

This is achieved through a compactor and a method as defined in the respective independent claims. Secondary features and particular embodiments of the object of the invention are defined in the corresponding dependent claims.

The invention starts from the acknowledgment by the author of the invention that the compaction of the containers in the prior art compactors is not optimised.

In other words, the roller compactors for prior art containers do not compact the containers in such a way that they remain in a flattened, or flat, or compressed, or squashed configuration following the passage between the compacting rollers. In fact, due to the shape memory of the materials with which many of the containers are made, the containers themselves tend, once compacted, to return, even if only minimally, to their original configuration, that is to say, not flattened. It follows that the overall size of the compacted containers is not the minimum possible.

Moreover, according to the invention, the compacting device for compacting articles, preferably containers, comprises a compacting unit, configured to compact articles, which in turn comprises a first operating member and a second operating member. The first operating member comprises a first rotating shaft, configured to rotate in a first direction of rotation, and at least four protruding compaction elements arranged successively, or consecutively, along a circumferential direction of the first rotating shaft. These at least four protruding compaction elements of the first operating member define or form four depressions or recesses of the first operating member in the circumferential direction of the first rotating shaft.

That is to say, when viewed from an end of the rotating shaft, the first operating member comprises four protruding compaction elements arranged like flower petals interspersed with four depressions. In particular, each protruding compaction element of the at least four protruding compaction elements of the first operating member extends radially from the first rotating shaft. In other words, consecutive protruding compaction elements of the at least four protruding compaction elements of the first operating member alternate along the circumferential direction of the first rotating shaft to the at least four depressions or recesses of the first operating member.

Preferably, the four elements are arranged equally and/or homogeneously distributed along the circumference of the shaft. Similarly, the second operating member comprises a second rotating shaft, arranged parallel to the first rotating shaft and configured to rotate in a second direction of rotation opposite to the first direction of rotation of the first rotating shaft, therefore an opposite direction of rotation with respect to the first rotating shaft.

The second compaction member comprises at least four protruding compaction elements arranged successively, or consecutively, along a circumferential direction of the second rotating shaft. These at least four protruding compaction elements of the second operating member define or form four depressions or recesses of the second operating member in the circumferential direction of the second rotating shaft. In particular, each protruding compaction element of the at least four protruding compaction elements of the second operating member extends radially from the second rotating shaft. In other words, consecutive protruding compaction elements of the at least four protruding compaction elements of the second operating member alternate along the circumferential direction of the second rotating shaft to the at least four depressions or recesses of the second operating member. As for the first compaction member, the compaction elements of the second operating member, when viewed from one end of the shaft, are arranged like petals of a flower distributed in a homogeneous way, and interspersed with depressions.

According to the invention, moreover, in a first operating configuration, one of the at least four compaction elements of the first operating member is received in a corresponding depression or recess of the four depressions or recesses of the second operating member. Moreover, according to a second operating configuration, one of the at least four successive or consecutive compaction elements of the second operating member is received in a corresponding depression or recess of the four depressions or recesses of the first operating member. A first rotation of the first rotating shaft and of the second rotating shaft corresponds to a first passage from the first configuration to the second configuration, while a second rotation of the first rotating shaft and of the second rotating shaft corresponds to a second passage from the second configuration to the first configuration. In particular, a passage from the first configuration to the second configuration causes a rotation of one of the at least four protruding compaction elements of the first operating member towards a first storage region, while a passage from the second configuration to the first configuration causes a rotation of one of the at least four protruding compaction elements of the second operating member towards a second storage region.

Each storage region is located downstream of the two compaction members.

A compaction direction is therefore created from an area for accumulating products to be compacted, passing in an intermediate area between the first compaction member and the second compaction member, and an area downstream of the compacting members where the first storage region and the second storage region are located.

Consequently, the shape and mutual arrangement of the protruding compaction elements and of the depressions or recesses of the first operating member and of the second operating member and their interaction allows not only an effective compaction of the articles inserted in the compacting device, but also the directing of the compacted product to a predetermined storage region. In particular, a compacting of an article between a protruding compaction element of an operating member and a depression or recess of the other operating member, favours an effective squashing of the article and prevents a possible return of the article to the shape it had prior to the compaction. Moreover, according to a preferred aspect of the invention, the shaping and interaction of the protruding compaction elements and of the depressions or recesses of the two operating members allows the subdivision of the selectively compacted articles in the first storage region or in the second storage region. Advantageously, therefore, the compacted articles can be stored separately, for example according to the characteristics of the articles themselves.

According to a preferred aspect of the invention, a third rotation of the first rotating shaft and of the second rotating shaft corresponds to a third passage from the first configuration to the second configuration, while a fourth rotation of the first rotating shaft and of the second rotating shaft corresponds to a fourth passage from the second configuration to the first configuration, and consequently a directing of the compacted product towards one storage region or the other storage region. Advantageously, therefore, each passage from the first configuration to the second configuration or vice versa corresponds to a compacting position or configuration of the operating members, in which this compacting position or configuration is configured to compact an article, preferably a container, between a protruding compaction element of an operating member and a depression or recess of the other operating member.

Preferably, according to a further preferred aspect, a passage from the first configuration to the second configuration or vice versa corresponds to a rotation of 45° of the first rotating shaft and of the second rotating shaft. In detail, each of the first rotation, the second rotation, the third rotation and the fourth rotation of the first rotating shaft and of the second rotating shaft corresponds to a quarter of a turn of the first rotating shaft and of the second rotating shaft.

According to a preferred aspect of the invention, each protruding compaction element of the at least four protruding compaction elements of the first operating member comprises a lobe-shaped or petal-shaped body, having a rounded convex profile. Similarly, according to this aspect, each protruding compaction element of the at least four protruding compaction elements of the second operating member comprises a lobe-shaped or petal-shaped body, having a rounded convex profile. Again according to this preferred aspect, each depression or recess of the four depressions or recesses of the first operating member and of the second operating member has a concave profile matching the convex profile of the lobe-shaped body.

In other words, according to this aspect, the protruding compaction elements of an operating member and the depressions or recesses of the other operating member have matching shapes. This configuration favours an effective compacting of an article, preferably a container, to be compacted.

For example, according to a preferred aspect, the protruding compaction elements can have a petal or lobe shape, while the depressions or recesses can have such a shape as to accommodate the protruding compaction elements in the shape of a lobe or petal. Furthermore, according to a preferred aspect of the invention, this configuration favours a conveying of an article, preferably a compacted container, towards a first storage region or towards a second storage region.

According to a further preferred aspect of the invention, the compacting device further comprises a movement device configured to control the rotation of the first rotating shaft and the rotation of the second rotating shaft. In other words, the movement device is configured to move the rotating shafts and to control their rotation speed. Preferably moreover, according to this preferred aspect, the compacting device comprises an identification device configured to analyse an article, preferably a container, inserted in the compacting device. On the basis of an analysis on an article, preferably a container, inserted in this compacting device carried out by the identification device, the movement device is configured to control the rotation of the first rotating shaft and of the second rotating shaft so as to convey a compacted article, preferably a container, into a first storage region or into a second storage region.

Advantageously, therefore, the movement device is configured to control the rotation of the rotating shafts on the basis of the analysis carried out on an article to be compacted by the identification device, in such a way as to selectively convey the compacted article into the first storage region or into the second storage region. For example, the identification device may be a camera configured to photograph the article inserted into the compacting device. Preferably, this camera is further configured to recognise the type of article inserted in the compactor. For example, the identification device can be operatively associated with a database comprising photographs of the different types of articles that can be inserted into the compacting device. According to this aspect, the camera can be configured to compare a photo taken of an article with the photographs of the articles in the database in order to recognise the article inserted in the compacting device. In combination or alternatively, the identification device may comprise, for example, a barcode reader. Consequently, on the basis of the analysis carried out by the identification device, an article inserted in the compacting device and then compacted by the compacting unit can be stored on the basis of its characteristics and/or its contents when it was in use, into the first storage region or into the second storage region. It follows that, advantageously, the articles inserted in the compacting device can be divided, for example to facilitate their recycling.

According to a further preferred aspect of the invention, starting from the first configuration, a 90° rotation of the first rotating shaft and of the second rotating shaft is configured to convey a compacted article towards the first storage region, while starting from the second configuration, a 90° rotation of the first rotating shaft and of the second rotating shaft is configured to convey a compacted article towards the second storage region. In other words, starting from a first compacting position or configuration of the operating members, with a subsequent insertion of an article to be compacted, a substantially 90° rotation of the first and second rotating shafts is configured to convey a compacted article towards the first storage region, while starting from a second compacting position or configuration of the operating members, with a subsequent insertion of an article to be compacted, a substantially 90° rotation of the first and second rotating shafts is configured to convey a compacted article towards the second storage region. Advantageously, therefore, the arrangement of the operating members before the insertion of an article to be compacted, together with the combination of the rotations of the rotating shafts, preferably controlled by the movement device, and the shape and configuration of the protruding compaction elements and of the depressions or recesses of the operating members determines a selective conveying of a compacted article into the first storage region or into the second storage region.

The invention also relates to a method for compacting articles, preferably containers. In detail, the method provides a step of arranging a compacting unit of a compacting device in a first or second operating configuration and inserting an article to be compacted, preferably a container, in the compacting unit of the compacting device. The method further provides for the rotation of a first member around a first rotating shaft and a second operating member around a second shaft rotating from a first configuration to a second configuration, or from a second configuration to a first configuration. In detail, in the first configuration one of at least four protruding compaction elements of the first operating member arranged successively, or consecutively, along a circumferential direction of the first rotating shaft is received in one of four depressions or recesses of the second operating member. Similarly, in the second configuration one of at least four protruding compaction elements of the second operating member arranged successively, or consecutively, along a circumferential direction of the second rotating shaft is received in one of four depressions or recesses of the first operating member. The method further comprises a step of selectively conveying an article, preferably a container, compacted by the compacting unit, into a first storage region or a second storage region.

Consequently, the method according to the invention allows the articles inserted in a compacting device to be effectively compacted. Moreover, advantageously, the method according to the invention allows the compacted articles to be selectively conveyed in a first storage region or in a second storage region.

Preferably, according to an aspect of the invention, the step of conveying a compacted article in the first storage region or in the second storage region is carried out by the compacting unit. Consequently, no further devices are required for identifying the compacted articles and separating these compacted articles.

According to a preferred aspect of the invention, the step of rotating the first operating member around a first rotating shaft and a second operating member around a second rotating shaft is carried out by a movement device configured to rotate the first rotating shaft in a first direction of rotation and the second shaft rotating in a second direction of rotation, opposite the first direction of rotation. This movement device is also configured to command and control the rotation of the first and second rotating shafts.

According to a further preferred aspect, the method comprises a step of analysing an article, preferably a container, to be compacted by means of an identification device. According to this aspect, the step of conveying a compacted article in the first storage region or in the second storage region is carried out on the basis of the analysis of the article to be compacted carried out by the identification device.

According to a preferred aspect, moreover, the step of conveying a compacted article from said compacting unit selectively into a first storage region or into a second storage region provides for, starting from the first operating configuration, rotating the first rotating shaft and the second rotating shaft by 90° to convey a compacted article to the first storage region. Alternatively, this step provides for, starting from the second operating configuration, rotating the first rotating shaft and the second rotating shaft by 90° to convey a compacted article into the second storage region.

Further advantages, characteristics and methods of use of the object of the invention will become evident from the following detailed description of its embodiments, presented merely by way of non-limiting examples.

It is however evident that each embodiment of the object of this disclosure can have one or more of the advantages listed above; however, no embodiment is required to simultaneously have all the listed advantages.

Reference will be made to the accompanying drawings, in which:
- Figure 1 is a side sectional view of a compacting device according to an aspect of the invention;
- Figure 2 is a perspective view of a compacting unit of a compacting device according to an aspect of the invention.

With reference to the accompanying drawings, an embodiment of a compacting device according to invention is denoted with reference numeral 1:
- Figures 3 to 5 show a compacting sequence of an article to be compacted starting from a first operating configuration;
- Figures 6 to 8 show a compacting sequence of an article to be compacted starting from a second operating configuration.

In the context of the invention, the expression "compacting device" means a device configured to compress, or compact, or squash and store inside it articles or products, preferably containers, inserted by a user. A typical example of a compacting device is a smart skip.

According to the context of the invention, the expression "containers" means products such as bottles, receptacles or packaging, preferably for foodstuffs.

According to a preferred aspect, the containers intended to be inserted into the compacting device 1 are made of plastic material, even more preferably of PET.

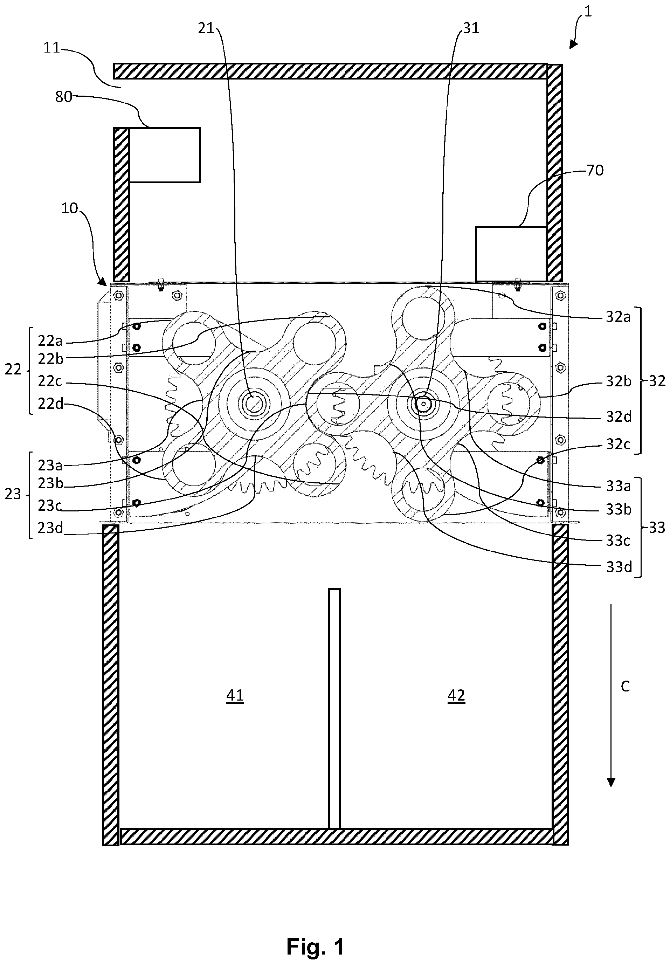

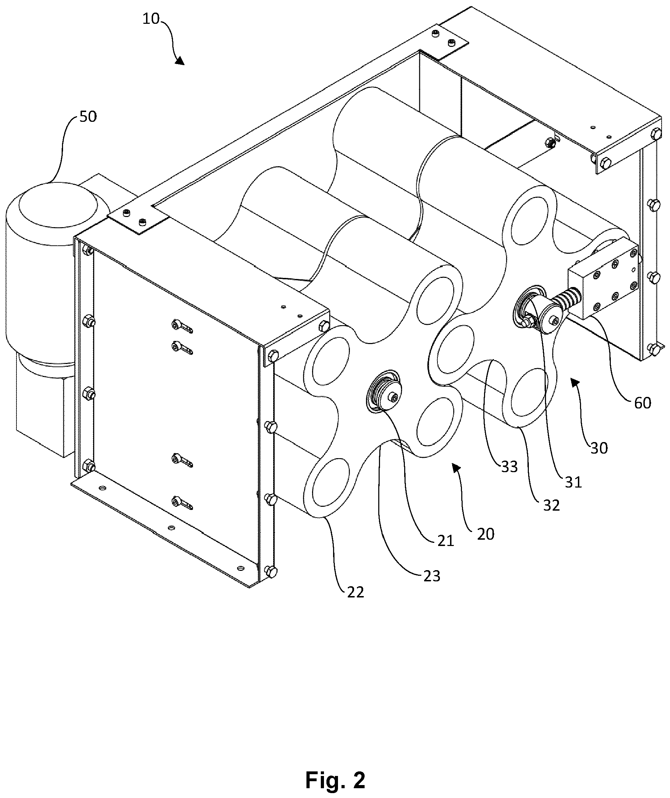

The compacting device 1 according to the invention specifically comprises a compacting unit 10, visible in detail in Figure 2, that is to say, a portion of the compacting device 1 configured to compact, or squash, or compress an article, preferably a container, inserted in the compacting device 1 itself. The compacting device 1 also comprises, as can be seen in Figure 1, a first storage region 41 and a second storage region 42, each configured to store articles, preferably containers, compacted by the compacting unit 10. Advantageously, the storage region is arranged downstream of said compacting unit 10 with respect to a compacting direction C.

In other words, the compacting device comprises two separate compartments 41, 42 configured to store items compacted by the compacting unit. Preferably, these first and second storage regions 41, 42 are configured to contain articles compacted by the compacting unit 10 before their recycling. Advantageously, the presence of a first storage region 41 and of a second storage region 42 allows the compacted articles to be differentiated, or subdivided. For example, for the purposes of the recycling process of the articles, it can be useful and advantageous to differentiate the articles according to their material. In particular, in the case of articles such as containers, in particular plastic containers, it may be advantageous to differentiate the compacted containers on the basis of the type of plastic with which they are made. Moreover, again in the case of plastic containers, for the recycling process following the storage in the compacting device 1, it may be advantageous to divide the compacted containers on the basis of the substances they contained before being inserted into the compacting device 1 itself. In particular, it may be advantageous to divide the containers which were configured to contain food products, such as food and/or beverages, from the containers which were configured to contain substances such as soaps and/or detergents.

The compacting unit 10 of the compacting device 1 in turn comprises at least a first operating member 20 and a second operating member 30. The first operating member 20 and the second operating member 30 are configured to operate in conjunction with each other in order to compact an article, preferably a container, inserted in the compacting device 1. In particular, preferably, the first operating member 20 and the second operating member 30 are configured to compress an article inserted in the compacting device 1 and passing between said first operating member 20 and said second operating member 30. For this purpose, the compacting device 1, and in particular the compacting unit 10, can comprise an actuator device 60 configured to control a compression force between the first operating member 20 and the second operating member 30. For example, preferably, the actuator device can comprise a cylinder and a piston associated with the first and/or the second operating member 20, 30.

The first operating member 20 includes a first rotating shaft 21, while the second operating member 30 includes a second rotating shaft 31.

In detail, the first operating member 20 is configured to rotate integrally with said first rotating shaft 21, while the second operating member 30 is configured to rotate integrally with said second rotating shaft 31. In other words, these first and second rotating shafts 21, 31 are arranged and configured in such a way as to rotate the first operating member 20 and the second operating member 30 respectively and cause said first operating member 20 and second operating member 30 to operate in conjunction, or interact, with each other so as to compact, or compress, an article inserted in the compacting device 1.

In particular, the first rotating shaft 21 is arranged parallel to the second rotating shaft 31 and is configured to rotate in a first direction of rotation, while the second rotating shaft 31 is configured to rotate in a second direction of rotation opposite to the first direction of rotation of the first rotating shaft 21. In other words, preferably, the first rotating shaft 21 and the second rotating shaft 31 are counter-rotating. Consequently, the first operating member 20 and the second operating member 30 are also counter-rotating, being associated respectively with the first rotating shaft 21 and with the second rotating shaft 31. In detail, according to the embodiment illustrated in Figure 1, the first rotating shaft 21 is configured to rotate clockwise, while the second rotating shaft 31 is configured to rotate counterclockwise. Moreover, the first rotating shaft 21 and the second rotating shaft 31 are preferably arranged parallel to a horizontal direction of the compacting device 1, that is, parallel to a resting surface of the compacting device 1.

Specifically, according to a preferred aspect of the invention, the compacting device 1 can comprise a movement device 50 configured to control the rotation of the first rotating shaft 21 and of the second rotating shaft 31. Preferably, the movement device 50 is configured to control the direction of rotation of the first rotating shaft 21 and of the second rotating shaft 31, and/or the rotation speed of the first rotating shaft 21 and of the second rotating shaft 31.

With particular reference to Figure 1, the first operating member 20 comprises a plurality of protruding compaction elements 22 and a plurality of depressions or recesses 23. Similarly, the second operating member 30 comprises a plurality of protruding compaction elements 32 and a plurality of depressions or recesses 33. In use, the protruding compaction elements 22 of the first operating member 20 are configured to operate in conjunction with the depressions or recesses 33 of the second operating member 30 in order to compact an article. Similarly, in use, the protruding compaction elements 32 of the second operating member 30 are configured to operate in conjunction with the depressions or recesses 23 of the first operating member 20 in order to compact an article.

In detail, the first operating member 20 comprises at least four protruding compaction elements 22a, 22b, 22c, 22d arranged successively, or consecutively, along a circumferential direction of the first rotating shaft 21. These at least four protruding compaction elements 22a, 22b, 22c, 22d are elements configured to compact, or compress, an article and are arranged in succession, or consecutively, one after the other, around the first rotating shaft 21.

Preferably, each protruding compaction element 22a, 22b, 22c, 22d of the at least four protruding compaction elements 22a, 22b, 22c, 22d of the first operating member 20 extends radially from the first rotating shaft 21. In other words, each protruding compaction element 22a, 22b, 22c, 22d can be a projection, or a protuberance, of the first rotating shaft 21. Preferably, each protruding compaction element 22a, 22b, 22c, 22d is made integrally with the first rotating shaft 21.

Even more in detail, consecutive protruding compaction elements 22a, 22b, 22c, 22d of the at least four protruding compaction elements 22a, 22b, 22c, 22d of the first operating member 20 are alternated in the circumferential direction of the first rotating shaft 21 with a depression or recess 23 of the first rotating shaft 21. In detail, the at least four protruding compaction elements 22a, 22b, 22c, 22d of the first operating member 20 define or form, in the circumferential direction of the first rotating shaft, four depressions or recesses 23a, 23b, 23c, 23d of the first operating member 20.

In other words, the first operating member 20 comprises an alternation, in the circumferential direction of the first rotating shaft 21, of protruding compaction elements 22a, 22b, 22c, 22d and depressions or recesses 23a, 23b, 23c, 23d. In other words, each protruding compaction element 22a, 22b, 22c, 22d of the first operating member 20 is alternated along the circumferential direction of the first rotating shaft 21 with respect to a successive protruding compaction element 22a, 22b, 22c, 22d by a depression or recess 23a, 23b, 23c, 23d of the first operating member 20. In other words, between two consecutive or successive protruding compaction elements 22a, 22b, 22c, 22d of the first operating member 20, there is a depression or recess 23a, 23b, 23c, 23d of the first operating member 20. Consequently, the first operating member 20 comprises at least four depressions or recesses.

Preferably, each protruding compaction element 22a, 22b, 22c, 22d of the first operating member 20 is arranged diametrically opposite to another protruding compaction element 22a, 22b, 22c, 22d of the first operating member 20 with respect to the first rotating shaft 21. Similarly, the depression or recess 23a, 23b, 23c, 23d of the first operating member 20 is arranged diametrically opposite to another depression or recess 23a, 23b, 23c, 23d of the first operating member 20 with respect to the first rotating shaft 21.

For example, each protruding compaction element 22a, 22b, 22c, 22d of the first operating member 20 can be a substantially cylindrical element, preferably hollow, associated with the first rotating shaft 21 and arranged parallel to the latter. Each depression or recess 23a, 23b, 23c, 23d of the first operating member 20 can instead be an element having a shape suitable for interacting with a protruding compaction element 32a, 32b, 32c, 32d of the second operating member 30. For example, each depression or recess 23a, 23b, 23c, 23d can have a shape suitable for accommodating, at least partially, a protruding compaction element 32a, 32b, 32c, 32d of the second operating member 30.

With particular reference to Figure 1, in a similar manner to the first operating member 20, the second operating member 30 comprises at least four protruding compaction elements 32a, 32b, 32c, 32d arranged successively, or consecutively, along a circumferential direction of the second rotating shaft 31. These at least four protruding compaction elements 32a, 32b, 32c, 32d are elements configured to compact, or compress, an article and are arranged in succession, or consecutively, one after the other, around the second rotating shaft 31.

Preferably, each protruding compaction element 32a, 32b, 32c, 32d of the at least four protruding compaction elements 32a, 32b, 32c, 32d of the second operating member 30 extends radially from the second rotating shaft 31. In other words, each protruding compaction element 32a, 32b, 32c, 32d can be a projection, or a protuberance, of the second rotating shaft 31. Preferably, each protruding compaction element 32a, 32b, 32c, 32d is made in one piece with the first rotating shaft 31.

Even more in detail, consecutive protruding compaction elements 32a, 32b, 32c, 32d of the at least four protruding compaction elements 32a, 32b, 32c, 32d of the second operating member 30 are alternated in the circumferential direction of the second rotating shaft 31 with a depression or recess 33 of the second rotating shaft 31.

In other words, the second operating member 30 comprises an alternation, in the circumferential direction of the second rotating shaft 31, of protruding compaction elements 32a, 32b, 32c, 32d and depressions or recesses 33a, 33b, 33c, 33d. In other words, each protruding compaction element 32a, 32b, 32c, 32d of the second operating member 30 is alternated along the circumferential direction of the second rotating shaft 31 with respect to a successive protruding compaction element 32a, 32b, 32c, 32d by a depression or recess 33a, 33b, 33c, 33d of the second operating member 30. In other words, between two consecutive or successive protruding compaction elements 32a, 32b, 32c, 32d of the second operating member 30, there is a depression or recess 33a, 33b, 33c, 33d of the second operating member 30.

Preferably, each protruding compaction element 32a, 32b, 32c, 32d of the second operating member 30 is arranged diametrically opposite to another protruding compaction element 32a, 32b, 32c, 32d of the second operating member 30 with respect to the second rotating shaft 31. Similarly, each depression or recess 33a, 33b, 33c, 33d of the second operating member 30 is arranged diametrically opposite to another depression or recess 33a, 33b, 33c, 33d of the second operating member 30 with respect to the second rotating shaft 31.

For example, each protruding compaction element 32a, 32b, 32c, 32d of the second operating member 30 can be a substantially cylindrical element, preferably hollow, associated with the second rotating shaft 31 and arranged parallel to the latter. Each depression or recess 33a, 33b, 33c, 33d of the second operating member 30 can instead be an element having a shape suitable for interacting with a protruding compaction element 22a, 22b, 22c, 22d of the first operating member 20. For example, each depression or recess 33a, 33b, 33c, 33d can have a shape suitable for accommodating, at least partially, a protruding compaction element 22a, 22b, 22c, 22d of the first operating member 20.

As mentioned above, each protruding compaction element 22 of the at least four protruding compaction elements 22a, 22b, 22c, 22d of the first operating member 20 is configured, in use, to operate in conjunction with a depression or recess 33 of the at least four depressions or recesses 33a, 33b, 33c, 33d of the second operating member 30 in order to compact, or compress, or squash an article, preferably a container. Similarly, each protruding compaction element 32 of the at least four protruding compaction elements 32a, 32b, 32c, 32d of the second operating member 30 is configured, in use, to operate in conjunction with a depression or recess 23 of the at least four depressions or recesses 23a, 23b, 23c, 23d of the first operating member 20 in order to compact, or compress, or squash an article, preferably a container.

Specifically, according to a preferred aspect, each protruding compaction element 22a, 22b, 22c, 22d of the at least four protruding compaction elements 22a, 22b, 22c, 22d of the first operating member 20 comprises a first end portion 24 associated with the first rotating shaft 21 and a second end portion 25 distal with respect to said first rotating shaft 21. The second end portion 25 of each protruding compaction element 22a, 22b, 22c, 22d of the first operating member 20 also has a convex profile, or a profile curved towards the first rotating shaft 21, configured to compact an article. In detail, the second end portion 25 of each protruding compaction element 22a, 22b, 22c, 22d of the first operating member 20 is configured, in use, to operate in conjunction with a depression or recess 33a, 33b, 33c, 33d of the second member operating 30 in order to compact an article. Advantageously, each depression or recess 33a, 33b, 33c, 33d of the second operating member 30 has a profile 36, or compacting portion, configured to at least partially receive a protruding compaction element 22a, 22b, 22c, 22d of the first operating member 20. According to a preferred aspect of the invention, this profile 36, or compacting portion, of each depression or recess 33a, 33b, 33c, 33d of the second operating member 30 is concave, or curved outwardly with respect to the second rotating shaft 31.

Preferably, according to an aspect of the invention, each protruding compaction element 22a, 22b, 22c, 22d of the at least four protruding compaction elements 22a, 22b, 22c, 22d of the first operating member 20 is shaped like a petal, or lobe, or comprises a lobe-shaped body, or petal-shaped body. Similarly, each depression or recesses of the at least four depressions or recesses 23a, 23b, 23c, 23d of the first operating member 20 has a concave profile matching the convex profile of the lobe-shaped body.

Similarly to the protruding elements of the first operating member 20, according to a preferred aspect, each protruding compaction element 32a, 32b, 32c, 32d of the at least four protruding compaction elements 32a, 32b, 32c, 32d of the second operating member 30 comprises a first portion end 34 associated with the second rotating shaft 31 and a second end portion 35 distal with respect to said second rotating shaft 31. The second end portion 35 of each protruding compaction element 32a, 32b, 32c, 32d of the second operating member 30 also has a convex profile, or a profile curved towards the second rotating shaft 31, configured to compact an article. In detail, the second end portion 35 of each protruding compaction element 32a, 32b, 32c, 32d of the second operating member 30 is configured, in use, to operate in conjunction with a depression or recess 23a, 23b, 23c, 23d of the first member operating 20 in order to compact an article. Advantageously, each depression or recess 23a, 23b, 23c, 23d of the first operating member 20 has a profile 25, or compacting portion, configured to at least partially receive a protruding compaction element 32a, 32b, 32c, 32d of the second operating member 30. According to a preferred aspect of the invention, this profile 25, or compacting portion, of each depression or recess 23a, 23b, 23c, 23d of the first operating member 20 is concave, or curved outwardly with respect to the first rotating shaft 21.

Preferably, according to an aspect of the invention, each protruding compaction element 32a, 32b, 32c, 32d of the at least four protruding compaction elements 32a, 32b, 32c, 32d of the second operating member 30 is shaped like a petal, or lobe, or comprises a petal-shaped body, or lobe-shaped body. Similarly, each depression or recesses of the at least four depressions or recesses 33a, 33b, 33c, 33d of the second operating member 30 has a concave profile matching the convex profile of the lobe-shaped body.

As mentioned above, in order to compact an article, the protruding compaction elements of an operating member are configured to operate in conjunction with a respective depression or recess of the other operating member. In detail, at least in a first operating configuration, one of the at least four protruding compaction elements 22a, 22b, 22c, 22d of the first operating member 20 is received in a corresponding depression or recess of the at least four depressions or recesses 33a, 33b, 33c, 33d of the second operating member. Consequently, the depressions or recesses 33a, 33b, 33c, 33d of the second operating member 30 and the at least four protruding compaction elements 22a, 22b, 22c, 22d of the first operating member 20 are compaction portions of the respective operating members 20, 30 configured to operate in conjunction with each other in order to compact an article, preferably a container.

Similarly, again in order to compact an article, and as a consequence of the rotation of the first and second rotating shaft 21, 31, in at least a second operating configuration one of the at least four protruding compaction elements 32a, 32b, 32c, 32d of the second operating member 30 is received in a corresponding depression or recess of the at least four depressions or recesses 23a, 23b, 23c, 23d of the first operating member 20. Consequently, the depressions or recesses 23a, 23b, 23c, 23d of the first operating member 20 and the at least four protruding compaction elements 32a, 32b, 32c, 32d of the second operating member 30 are compaction portions of the respective operating members 20, 30 configured to operate in conjunction with each other in order to compact an article, preferably a container.

In detail, starting from the first operating configuration, a first rotation of the first rotating shaft 21 and of the second rotating shaft 31 corresponds to a first passage from the first operating configuration to the second operating configuration, while a second rotation of the first rotating shaft 21 and of the second rotating shaft 31 corresponds to a second passage from the second operating configuration to the first operating configuration. Similarly, a third rotation of the first rotating shaft 21 and of the second rotating shaft 31 corresponds to a first passage from the first operating configuration to the second operating configuration, while a fourth rotation of the first rotating shaft 21 and of the second rotating shaft 31 corresponds to a fourth passage from the second operating configuration to the first operating configuration. Advantageously, therefore, each passage from the first operating configuration to the second operating configuration corresponds to a passage to a compacting configuration of the first and of the second operating members 20, 30, wherein the compacting device 1 is configured to compact an article, preferably a container.

Preferably, each of the first rotation, of the second rotation of the first rotating shaft 21 and of the second rotating shaft 31 corresponds to a quarter of a turn, or a rotation of 45°, of both the first rotating shaft 21 and the second rotating shaft 31. In detail, the first operating member 20 is configured to rotate clockwise by 45° to pass from the first operating configuration to the second operating configuration, or vice versa, while the second operating member 30 is configured to rotate counterclockwise by 45° to pass from one operational configuration to the other. Similarly, also a third rotation, a fourth rotation of the first and second rotating shafts 21, 31, corresponds to a rotation of the latter by a quarter of a turn, or a rotation of 45°. Consequently, each rotation by 45° or a quarter of a turn of the first rotating shaft 21 and of the second rotating shaft 31 corresponds to a passage from the first operating configuration to the second operating configuration, or vice versa, and therefore to a compacting configuration of the compacting device 1, in particular of the first operating member 20 and of the second operating member 30. In other words, each rotation of 45°, or of a quarter of a turn, of the first and second rotating shafts 21, 31, corresponds, in use, to a compaction of an article, in particular of a container.

Moreover, a passage from the first operating configuration to the second operating configuration causes a rotation of one of the at least four compaction elements 22a, 22b, 22c, 22d of the first operating member 20 towards a first storage region 41, while a passage from the second operating configuration to the first operating configuration causes a rotation of one of the at least four protruding compaction elements 32a, 32b, 32c, 32d of the second operating member 30 towards a second storage region 42. It follows that, advantageously, a compacted article can be selectively conveyed to a first storage region 41 or a second storage region 42.

In detail, according to a preferred aspect of the invention, starting from the first operating configuration, a rotation of 90°, or half a turn, of the first rotating shaft 21 and of the second rotating shaft 31 is configured to convey a compacted article towards the first storage region 42, while starting from the second operating configuration, a rotation of a half a turn, or 90°, of the first rotating shaft 21 and of the second rotating shaft 31 is configured to convey a compacted article towards the second storage region 42.

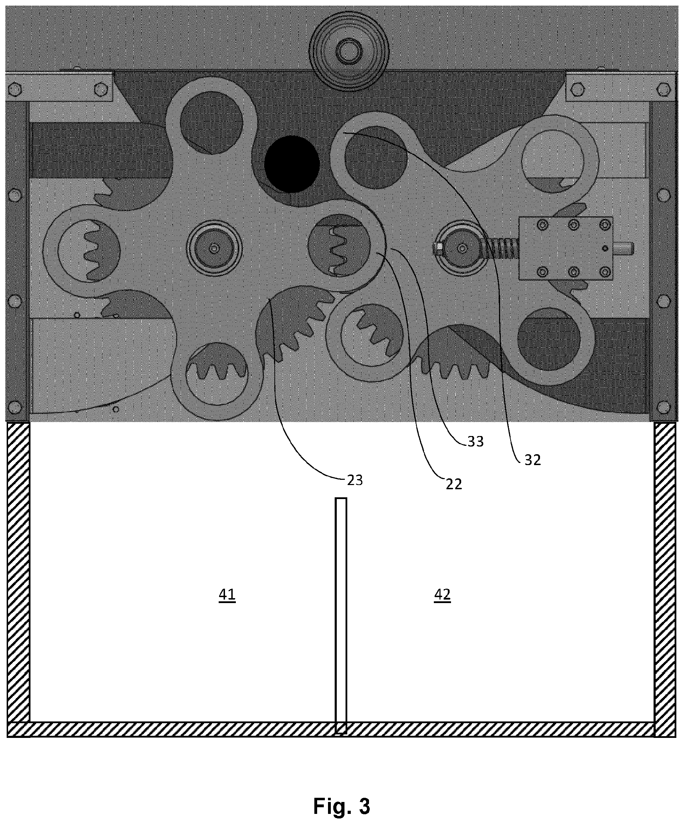

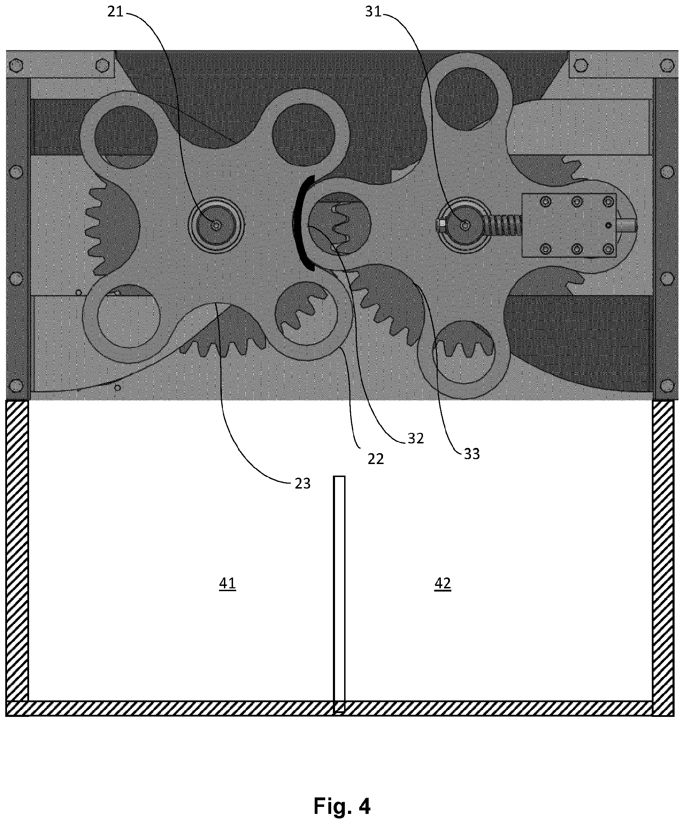

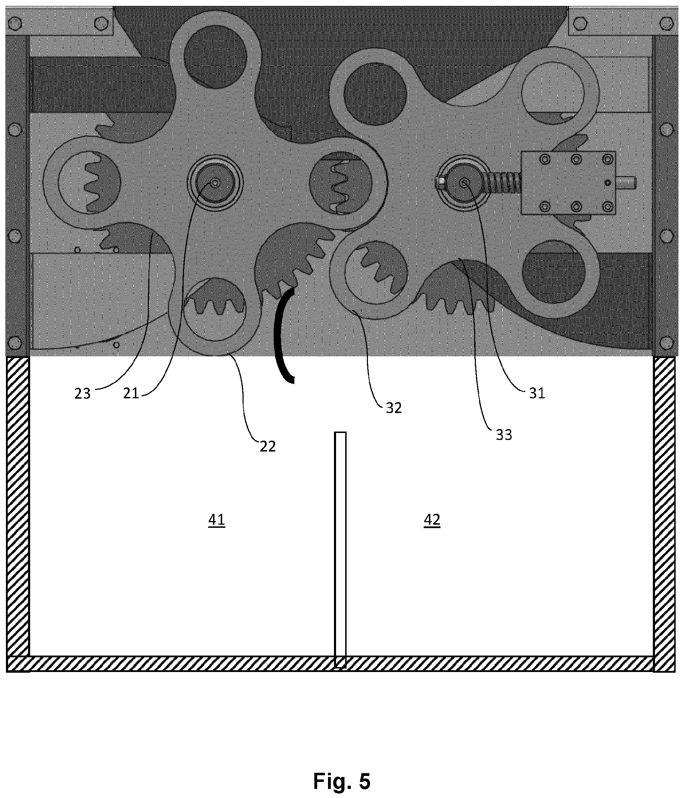

Basically, with particular reference to Figures 3 to 5, the compacting device 1 according to the invention is configured in such a way that, upon insertion of an article to be compacted which is arranged in the compacting device when this is in the first operating configuration, it corresponds to a conveying of the same compacted article towards the first storage region 41. Specifically, with particular reference to Figure 3, an insertion of an article to be compacted, represented as a black disk in Figure 3, when the compacting device 1 is in the first operating configuration, corresponds to a compaction of the same article to be compacted between one of the four protruding compaction elements 32a, 32b, 32c, 32d of the second operating member 30 and a respective recess 23a, 23b, 23c, 23d of the first operating member 20 following a first rotation, preferably substantially by half a turn, or 45°, of the first and second rotating shafts 21, 31, that is, following the passage from the first operating configuration to the second operating configuration, as indicated in Figure 4. Following a second rotation, represented in Figure 5, preferably substantially by half a turn, or 45°, following the first rotation, and in the same direction thereof, of the first and second rotating shafts 21, 31, that is, following the passage from the second operating configuration to the first compaction operating configuration, the compacted element is conveyed towards the first storage region 41. Substantially, a passage from the first operating configuration to the second operating configuration causes a compaction of the article to be compacted by one of the four protruding compaction elements 32a, 32b, 32c, 32d of the second operating member 30 and a respective recess 23a, 23b, 23c, 23d of the first operating member 20. Following a successive rotation of the first and second rotating shafts, 21, 31, the compacted element is momentarily retained in the respective recess 23a, 23b, 23c, 23d of the first operating member 20 and subsequently falls by gravity into the first storage region 41, arranged below the first operating member 20.

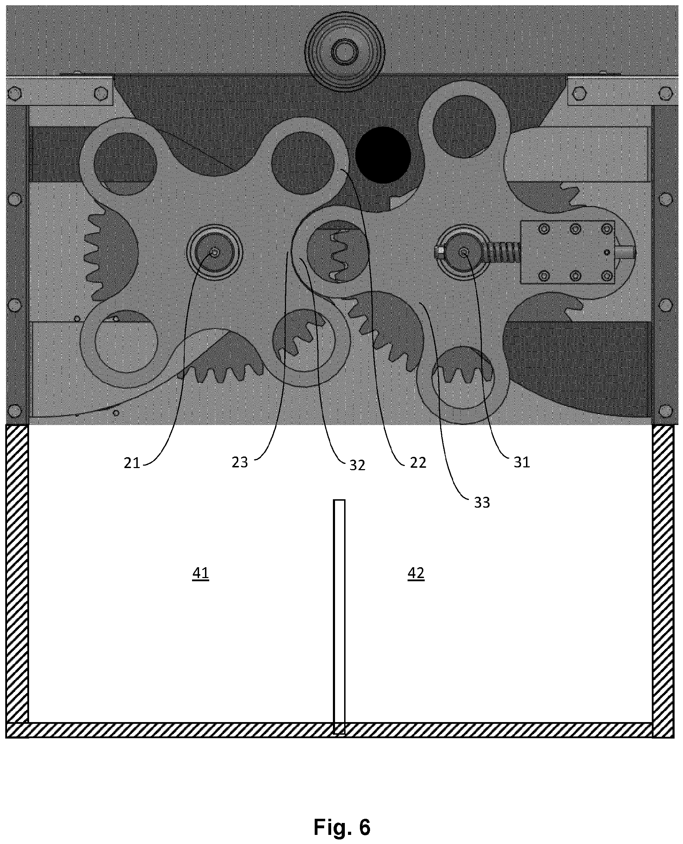

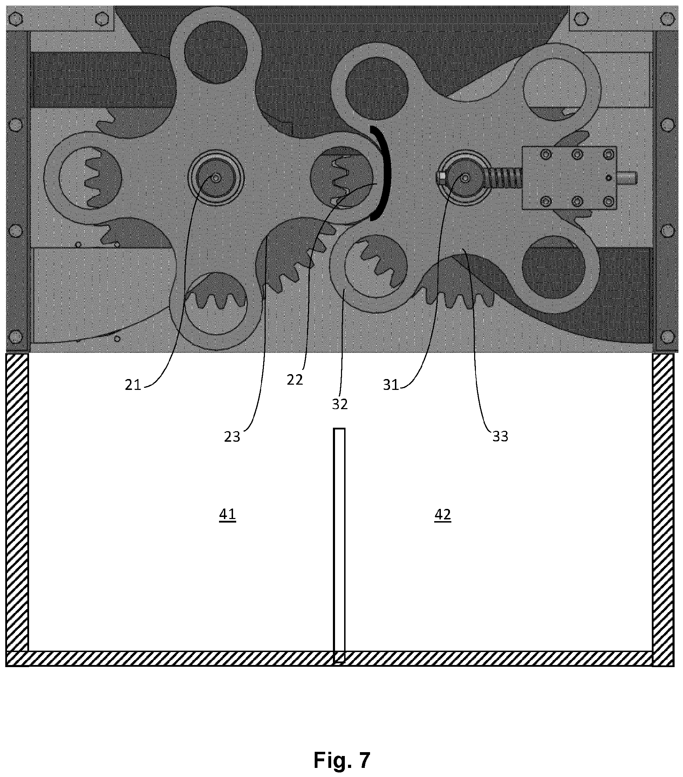

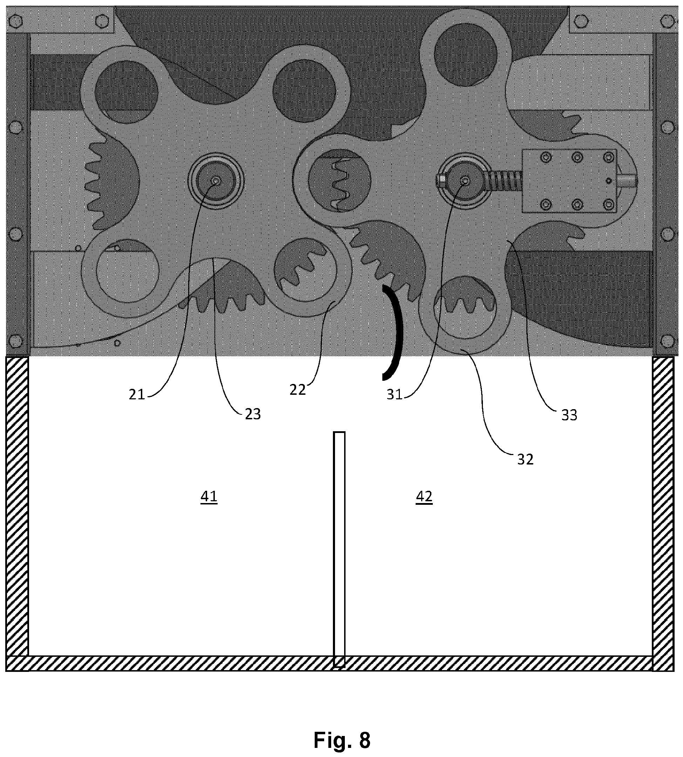

Similarly, with particular reference to Figures 6 to 8, the compacting device 1 according to the invention is configured in such a way that, upon insertion of an article to be compacted which is arranged in the compacting device when this is in the second operating configuration, it corresponds to a conveying of the same compacted article towards the second storage region 42. Specifically, an insertion of an article to be compacted, as indicated in Figure 6 in which the article to be compacted is represented by a black disk, when the compacting device 1 is in the second operating configuration, corresponds to a compaction of the same article to be compacted between one of the four protruding compaction elements 22a, 22b, 22c, 22d of the first operating member 20 and a respective recess 33a, 33b, 33c, 33d of the second operating member 30 following a first rotation, as shown in Figure 7, preferably substantially by half a turn, or 45°, of the first and second rotating shafts 21, 31, that is, following the passage from the second operating configuration to the first operating configuration. Following a second rotation, preferably substantially by half a turn, or 45°, following the first rotation, and in the same direction thereof, of the first and second rotating shafts 21, 31, that is, following the passage from the first operating configuration to the second operating configuration, as indicated in Figure 8, the compacted element is conveyed towards the second storage region 42. Substantially, a passage from the second operating configuration to the first operating configuration causes a compaction of the article to be compacted by one of the four protruding compaction elements 22a, 22b, 22c, 22d of the first operating member 20 and a respective recess 33a, 33b, 33c, 33d of the second operating member 30. Following a successive rotation of the first and second rotating shafts, 21, 31, the compacted element is momentarily retained in the respective recess 33a, 33b, 33c, 33d of the second operating member 30 and subsequently falls by gravity into the second storage region 42, arranged below the second operating member 30.

Consequently, the geometry and shape of the first operating member 20 and of the second operating member 30, in particular of the at least four protruding compaction elements and of the at least four depressions or recesses of each of said first and second operating members 20, 30, and the way in which these elements interact with each other, determine a selective conveying of a compacted article, preferably a compacted container, in the first storage region 41 or in the second storage region 42, depending on the rotation of the first rotating shaft 21 and of the second rotating shaft 31. More specifically, the insertion of an article to be compacted in the compacting device 1 determines a compacting of this article and a selective conveying of the same towards the first or second storage region 41, 42 according to the operating configuration of the compacting device 1 when the article to be compacted is inserted. In other words, an insertion of an article to be compacted into the compacting device 1 when this is in the first operating configuration corresponds to a compaction of the article and a conveying of the compacted article towards the first storage region 41. Similarly, an insertion of an article to be compacted into the compacting device 1 when this is in the second operating configuration corresponds to a compaction of the article and a conveying of the compacted article towards the second storage region 42. Advantageously, therefore, it is possible to establish a priori the conveying of an article to be compacted towards the first or second storage region 41, 42 by suitably arranging the compacting device 1 in the first or second operating configuration.

In yet other words, advantageously, with a view to selectively conveying a compacted article, preferably a compacted container, from the compacting unit 10 towards the first storage region 41 or towards the second storage region 42, the compacting unit 10 of the compacting device 1 is configured not only for compacting an article, but also for conveying a compacted article selectively into a first storage region 41 or into a second storage region 42. In detail, the number of protruding compaction elements 22a, 22b, 22c, 22d and of the depressions or recesses 23a, 23b, 23c, 23d of the first operating member 20 and their respective shape and the number of protruding compaction elements 32a, 32b, 32c, 32d and of the depressions or recesses 33a, 33b, 33c, 33d of the second operating member 30 and their respective shape, together with the fact that the first operating member 20 and the second operating member 30 are mounted on counter-rotating shafts, allows a compacted article to be selectively in the first storage region 41 or in the second storage region 42.

In particular, according to a preferred aspect, in order to selectively convey a compacted article towards the first or second storage region 41, 42, the compacting device 1 can comprise a control unit 70, configured to control the movement device 50 and, preferably, also the actuator device 60. In detail, by suitably checking the arrangement of the compacting device 1 in the first or second operating configuration, the direction and speed of rotation of the first and second rotating shafts 21, 31, and consequently of the first and second operating members 20, 30, it is possible to selectively convey a compacted article in the first storage region 41 or in the second storage region 42.

More specifically, thanks to the shape of the protruding compaction elements 22, 32 and the depressions or recesses 32, 33 of the first and second operating members, and to the action of the control unit 70 on the movement device 50 and consequently on the rotation of the first and second rotating shafts 21, 31, it is possible to convey a compacted container in the first storage region 41 or in the second storage region 42.

According to a preferred aspect of the invention, the compacting device 1 further comprises an identification device 80 configured to analyse an article inserted in the compacting device 1. In detail, the identification device 80 is configured to detect characteristics of an article inserted in the compacting device 1. For example, the identification device 80 can comprise a video camera or a camera configured to photograph and recognise an article inserted in the compacting device 1. In combination or alternatively, the identification device 80 may comprise a barcode reader and/or a weighing scale. Preferably, the identification device 80 is placed at an opening 11 of the compacting device 1 configured for the insertion of an article to be compacted.

In particular, according to a preferred aspect, on the basis of the analysis on an article, preferably a container, inserted in the compacting device 1 carried out by the identification device 80, the movement device 50 is configured to control the rotation of the first rotating shaft 21 and of the second rotating shaft 31 so as to convey an article, preferably a container, compacted in a first storage region 41 or in a second storage region 42.

More in detail, preferably, the identification device 80 is operatively connected to the control unit 70 of the compacting device 1. In this way, according to the analysis on an article to be compacted inserted in the compacting device 1 carried out by the identification device 80, the control unit 70 controls the actuation of the movement device 50 and consequently the rotation of the first rotating shaft 21 and of the second rotating shaft 31 so as to convey an article compacted from the compacting unit 10 into the first storage region 41 or into the second storage region 42. Advantageously therefore, the articles inserted in the compacting device 1 and compacted by the compacting unit 10 can be stored in a different way according, for example, to the material they are made of, their shape, or their prior contents.

According to a further preferred aspect of the invention, the surface of the protruding compaction elements 22, 32 and/or the surface of the depressions or recesses 23, 33 respectively of the first operating member 20 and of the second operating member 30 is/are knurled. In other words, such a surface, or surfaces, may comprise protuberances, or projections and recesses, or depressions. Advantageously, this makes it possible to effectively compact articles to be compacted made of shape memory materials, thus preventing these articles from returning to their original shape after compaction.

The invention also relates to a method for compacting articles, preferably containers.

In the description of the method, the elements of the compacting device 1 involved in the method and having the same function and the same structure as the elements previously described retain the same reference number and are not again described in detail.

The method according to the invention provides for placing a compacting unit 10 of a compacting device 1 in a first operating configuration or in a second operating configuration. The method further provides for inserting an article to be compacted into said compacting unit 10 of said compacting device 1. Preferably, the article to be compacted is a container, even more preferably made of plastic material.

The method provides a further step of rotating a first operating member 20 around a first rotating shaft 21 and a second operating member 30 around a second rotating shaft 31 from a first operating configuration to a second configuration, or from a second operating configuration to a first operational configuration in order to compact an article inserted in the compacting device 1. In detail, in the first operating configuration, one of at least four protruding compaction elements 22a, 22b, 22c, 22d of the first operating member 20 arranged successively, or consecutively, along a circumferential direction of the first rotating shaft 21 is received in one of at least four depressions or recesses of the second operating member 30. Similarly, in the second operating configuration, one of at least four protruding compaction elements 32a, 32b, 32c, 32d of the second operating member 30 arranged successively, or consecutively, along a circumferential direction of the second rotating shaft 31 is received in one of at least four depressions or recesses of the first operating member 20.

The method further comprises a step of selectively conveying an article, preferably a container, compacted by the compacting unit 10, into a first storage region 41 or a second storage region 42. Preferably, according to an aspect of the invention, this step of conveying an article, preferably a container, into the first storage region 41 or into the second storage region 42 is carried out by the compacting unit 10. This is allowed by the shape of the protruding compaction elements 22, 32 and of the depressions or recesses 23, 33 respectively of the first operating member 20 and of the second operating member 30 and by the way in which the protruding compaction elements and the depressions or recesses interact with each other, together with the rotation of the first rotating shaft 21 and of the second rotating shaft 31.

According to a preferred aspect of the invention, the step of rotating the first operating member 20 around a first rotating shaft 21 and the second operating member 30 around the second rotating shaft 31 is carried out by a movement device 50 configured to rotate the first rotating shaft 21 in a first direction of rotation and the second rotating shaft 31 in a second direction of rotation, opposite the first direction of rotation.

According to a further preferred aspect, the method according to the invention comprises a step of analysing an article, preferably a container, to be compacted and inserted into the compacting device 1 by means of an identification device 80. According to this preferred aspect, the step of selectively conveying a compacted article, preferably a container, into the first storage region 41 or into the second storage region 42 is carried out on the basis of the analysis of the article, preferably a container, to be compacted carried out by this identification device 80. In this way, on the basis of an analysis on an article to be compacted inserted in the compacting device 1 carried out by the identification device 80, the movement device 50 is configured to control the rotation of the first rotating shaft 21 and of the second rotating shaft 31 so as to convey an article compacted from the compacting unit 10 into the first storage region 41 or into the second storage region 42.

According to a preferred aspect of the invention, moreover, the step of conveying a compacted article from the compacting unit 10 selectively into the first storage region 41 or into the second storage region 42 provides for, starting from the first operating configuration, rotating the first rotating shaft 21 and the second rotating shaft 31 by 90°, or half a turn, to convey a compacted article into the first storage region 41. Alternatively, this step of conveying a compacted article, preferably a container, into the first storage region 41 or into the second storage region 42 provides for, starting from the second operating configuration, rotating the first rotating shaft 21 and the second rotating shaft 31 by 90°, or half a turn, to convey a compacted article in the second storage region 42.

The invention has thus far been described with reference to its embodiments. It is to be understood that there may be other embodiments pertaining to the same inventive core, all falling within the scope of protection of the claims set forth below.

## Claims

1. A compacting device (1) for compacting articles, preferably containers, wherein the compacting device comprises a compacting unit (10) comprising a first operating member (20) and a second operating member (30), wherein the first operating member (20) includes a first rotating shaft (21) and at least four protruding compaction elements (22a, 22b, 22c, 22d) arranged successively, or consecutively, along a circumferential direction of said first rotating shaft (21), wherein said at least four protruding compaction elements (22a, 22b, 22c, 22d) of said first operating member (20) define or form in said circumferential direction of said first rotating shaft (21) at least four depressions or recesses (23a, 23b, 23c, 23d) of said first operating member (20), wherein said second operating member (30) comprises a second rotating shaft (31) and at least four protruding compaction elements (32a, 32b, 32c, 32d) arranged successively, or consecutively, along a circumferential direction of said second rotating shaft (31), wherein said at least four successive, or consecutive, protruding compaction elements (32a, 32b, 32c, 32d) of said second operating member (30) define or form in said circumferential direction of said second rotating shaft (31) at least four depressions or recesses (33a, 33b, 33c, 33d) of said second operating member (30), wherein each protruding compaction element (22a, 22b, 22c, 22d) of said at least four protruding compaction elements (22a, 22b, 22c, 22d) of said first operating member (20) extends radially from said first rotating shaft (21) and each protruding compaction element (32a, 32b, 32c, 32d) of said at least four protruding compaction elements (32a, 32b, 32c, 32d) of said second operating member (30) extends radially from said second rotating shaft (31), and wherein said first rotating shaft (21) is configured to rotate in a first direction of rotation and is arranged parallel with respect to said second rotating shaft (31), wherein said second rotating shaft (31) is configured to rotate in a second direction of rotation, said second direction of rotation being opposite to said first direction of rotation, and wherein in at least a first operating configuration one of said at least four protruding compaction elements (22a, 22b, 22c, 22d) of said first operating member (20) is received in a corresponding depression or recess of the at least four depressions or recesses (33a, 33b, 33c, 33d) of said second operating member (30) and wherein in a second operating configuration one of said at least four successive, or consecutive, protruding compaction elements (32a, 32b, 32c, 32d) of said second operating member (30) is received in a corresponding depression or recess of the at least four depression or recess (23a, 23b, 23c, 23d) of said first operating member (20), wherein a first rotation of the first rotating shaft (21) and of the second rotating shaft (31) corresponds to a first passage from said first operating configuration to said second operating configuration and wherein a second rotation of the first rotating shaft (21) and of the second rotating shaft (31) corresponds to a second passage from the second operating configuration to the first operating configuration, and wherein a passage from the first operating configuration to the second operating configuration causes a rotation of one of said at least four protruding compaction elements (22a, 22b, 22c, 22d) of said first operating member (20) towards a first storage region (41) and a passage from the second operating configuration to the first operating configuration causes a rotation of said one of said at least four successive or consecutive protruding compaction elements, (32a, 32b, 32c, 32d) of said second operating member (30) towards a second storage region (42), wherein each protruding compaction element (22a, 22b, 22c, 22d) of said at least four protruding compaction elements (22a, 22b, 22c, 22d) of said first operating member (20) and each protruding compaction element (32a, 32b, 32c, 32d) of said at least four protruding compaction elements (32a, 32b, 32c, 32d) of said second operating member (30) comprises a lobe-shaped body or a petal-shaped body (24, 34) having a convex rounded profile, and each depression or recess of the at least four depressions or recesses (23a, 23b, 23c, 23d) of said first operating member (20) and each depression or recess of the at least four depressions or recesses (33a, 33b, 33c, 33d) of said second operating member has a concave profile matching the convex profile of the lobe-shaped body.

2. The compacting device (1) according to claim 1, wherein a third rotation of the first rotating shaft (21) and of the second rotating shaft (31) corresponds to a third passage from said first operating configuration to said second operating configuration, and wherein a fourth rotation of the first rotating shaft (21) and of the second rotating shaft (31) corresponds to a fourth passage from the second operating configuration to the first operating configuration.

3. The compacting device (1) according to claim 2, wherein each of the first rotation, second rotation, third rotation, and fourth rotation of the first rotating shaft (21) and of the second rotating shaft (31) corresponds to a ¼ of a rotation of the first rotating shaft (21) and of the second rotating shaft (31).

4. The compacting device (1) according to any one of the preceding claims, comprising:
- a movement device (50) configured to control the rotation of the first rotating shaft (21) and the rotation of the second rotating shaft (31),
- an identification device (80) configured to analyse an article inserted in the compacting device (1), wherein on the basis of an analysis on an article inserted in said compacting device (1) carried out by said identification device (80), the movement device (50) is configured to control the rotation of the first rotating shaft (21) and of the second rotating shaft (31) so as to convey said compacted article in a first storage region (41) or in a second storage region (42).

5. The compacting device (1) according to any one of the preceding claims, wherein starting from said first configuration a substantially 90° rotation of said first rotating shaft (21) and of said second rotating shaft (31) is configured to convey a compacted article towards said first storage region (41), and wherein, starting from said second configuration a substantially 90° rotation of said first rotating shaft (21) and of said second rotating shaft (31) is configured to convey a compacted article towards said second storage region (42).

6. The compacting device (1) according to any one of the preceding claims, wherein the surface of the protruding compaction elements (22, 32) and/or the surface of the depressions or recesses (23, 33) of the first operating member (20) and of the second operating member (30) comprise a plurality of depressions or recesses.

7. Method for compacting articles, preferably containers, comprising the steps of:
- placing a compacting unit (10) of a compacting device (1) in a first operating configuration or in a second operating configuration;
- inserting an article to be compacted into said compacting unit (10) of said compacting device (1);
- rotating a first operating member (20) around a first rotating shaft (21) and a second operating member (30) around a second rotating shaft (31) from a first operating configuration to a second operating configuration, or from a second operating configuration to a first operating configuration for compacting an article, preferably a container, in said compacting unit (10), wherein in said first operating configuration one of at least four protruding compaction elements (22a, 22b, 22c, 22d) of said first operating member (20) arranged successively, or consecutively along a circumferential direction of said first rotating shaft (21) is received in one of at least four depressions or recesses of said second operating member (30), and wherein in said second operating configuration one of at least four protruding compaction elements (32a, 32b, 32c, 32d) of said second operating member (30) arranged successively, or consecutively along a circumferential direction of said second rotating shaft (31) is received in one of four depressions or recesses of said first operating member (20);
- selectively conveying an article, preferably a container, compacted by said compacting unit (10) in a first storage region (41) or in a second storage region (42).

8. The method according to the preceding claim, wherein the step of selectively conveying a compacted article in said first storage region (41) or in said second storage region (42) is carried out by said compacting unit (10).

9. The method according to claim 7 or 8, wherein said step of rotating said first operating member (20) around a first rotating shaft (21) and said second operating member (30) around a second rotating shaft (31) is carried out by a movement device (50) configured to rotate said first rotating shaft (21) in a first direction of rotation and said second rotating shaft (31) in a second direction of rotation opposite to said first direction of rotation.

10. The method according to one of claims 7 to 9, comprising a step of analysing an article, preferably a container, to be compacted by means of an identification device (80), wherein the step of selectively conveying a compacted article in said first storage region (41) or in said second storage region (42) it is carried out on the basis of the analysis of the article to be compacted carried out by said identification device (80).

11. The method according to one of claims 7 to 10, wherein the step of selectively conveying a compacted article from said compacting unit (10) into a first storage region (41) or in a second storage region (42) provides for:
- starting from said first operating configuration, rotating said first rotating shaft (21) and said second rotating shaft (31) substantially by 90° to convey a compacted article in said first storage region (41), or
- starting from said second operating configuration, rotating said first rotating shaft (21) and said second rotating shaft (31) substantially by 90° to convey a compacted article in said second storage region (42).
